# EUROPÄISCHE PATENTSCHRIFT

(11) **EP 1 248 927 B1**
(45) Veröffentlichungstag und Bekanntmachung des Hinweises auf die Patenterteilung: **14.06.2006**
(21) Anmeldenummer: 01900443.1
(22) Anmeldetag: 13.01.2001
(51) Int. Cl.: F16N 7/34, B05B 7/00, B05B 12/08, B05B 7/24, B05B 12/14, B05B 17/04

(54) **ADDITIVZERSTÄUBUNGSVORRICHTUNG**
ADDITIVE NEBULISING DEVICE
DISPOSITIF DE PULVERISATION D'ADDITIFS

(30) Priorität: 21.01.2000 DE 10002414
(43) Veröffentlichungstag der Anmeldung: 16.10.2002
(73) Patentinhaber: Festo AG & Co., 73734 Esslingen (DE)
(72) Erfinder: ENGLER, Wolfgang, 73207 Plochingen (DE); ZINDL, Manfred, 72768 Reutlingen (DE); SONN, Michael, 73230 Kirchheim/Teck (DE); BERNER, Michael, 73230 Kirchheim/Teck (DE)
(74) Vertreter: Abel, Martin
(86) Internationale Anmeldenummer: PCT/EP2001/000378
(87) Internationale Veröffentlichungsnummer: WO 2001/053741

(56) Entgegenhaltungen:
- EP-A- 0 480 615
- EP-A- 0 864 849
- AT-T- 14 622
- DE-A- 1 500 561
- DE-A- 2 618 362
- DE-A- 2 935 657
- DE-A- 4 203 807
- DE-A- 4 424 785
- DE-A- 19 507 978
- DE-A- 19 707 400
- DE-B- 2 420 050
- DE-C- 19 532 566
- FR-A- 662 285
- FR-A- 2 742 811
- US-A- 3 841 438
- US-A- 4 526 191
- US-A- 4 919 232
- US-A- 5 020 636
- PATENT ABSTRACTS OF JAPAN vol. 008, no. 183 (P-296), 23. August 1984 (1984-08-23) & JP 59 073728 A (NIPPON SEIKO KK), 26. April 1984 (1984-04-26)

## Beschreibung

Die Erfindung betrifft eine Additivzerstäubungsvorrichtung zur Zerstäubung eines flüssigen Additivs, insbesondere eines Schmiermittels, in einem gasförmigen Druckmedium, insbesondere Druckluft, mit mindestens einem Additiv-Durchlasskanal, der einen Einlass zur Einspeisung des Additivs aus einer Additiv-Versorgungseinrichtung aufweist und dessen Auslass in einen Druckmedium-Strömungskanal mündet, der von dem Druckmedium durchströmt wird, wobei dem Druckmedium-Strömungskanal eine Erfassungseinrichtung zur Ermittlung mindestens einer physikalischen Größe zugeordnet ist, die die Erfassungseinrichtung über eine Meldeeinrichtung an eine Steuereinrichtung melden kann, und wobei in dem mindestens einen Additiv-Durchlasskanal eine Druckerzeugungsvorrichtung vorgesehen ist, mit der ein einen Additiv-Tropfen am Auslass ausstoßender Druckimpuls auf das Additiv ausgeübt werden kann und die durch die Steuereinrichtung in Abhängigkeit von der mindestens einen durch die Erfassungseinrichtung ermittelten physikalischen Größe steuerbar ist.

Die Erfindung betrifft ferner eine fluidtechnische Einrichtung, beispielsweise in Gestalt eines Ventils oder eines Antriebes, eine Aufbereitungseinrichtung, beispielsweise einen Öler, eine kartuschenartige Additiv-Versorgungseinrichtung für eine Additivzerstäubungsvorrichtung sowie ein Verfahren zur Zerstäubung eines flüssigen Additivs insbesondere eines Schmiermittels in einem gasförmigen Druckmedium.

In einem Pneumatiksystem, das durch Druckluft betrieben wird, werden die Pneumatikelemente des Systems durch einen oder mehrere sogenannte Druckluftöler mit Schmiermittel versorgt.

Diese Schmiermittel müssen für einen geringen Verschleiß der beweglichen Teile sorgen, die Reibkräfte in den Elementen gering halten und die Geräte vor Korrosion schützen. Druckluftöler arbeiten meist nach dem Venturi-Prinzip. Dabei wird Druckluft über eine Engstelle eines Druckluftkanales geführt. Im Bereich der Engstelle befindet sich ein Auslass einer Kanüle, die in einen Behälter mit Öl oder einem sonstigen Additiv getaucht ist. Durch den Druckunterschied zwischen dem Druck vor der Engstelle und dem Druck an der engsten Stelle der Engstelle wird das Öl aus dem Behälter gesaugt und mit der Luft vermischt. Ein solcher Druckluftöler wird beispielsweise in dem Buch "Pneumatische Steuerungen" von Werner Depert und Kurt Stoll, 10. Auflage 1994, ISDN 3-8023-1549-9 auf den Seiten 43 und 44 beschrieben.

Problematisch an einem solchen Druckluftöler ist, dass der Druckluftöler erst dann zu arbeiten beginnt, wenn eine genügend große Strömung vorhanden ist. Bei zu kleiner Luftentnahme reicht die Strömungsgeschwindigkeit an der Düse nicht mehr aus, um einen ausreichenden Unterdruck zu erzeugen und damit Öl aus dem Behälter anzusaugen. Ferner ist man an die konstruktiv bedingte Ölfördercharakteristik, also die Ölfördermenge in Abhängigkeit vom Luftdurchfluss, des Gerätes gebunden, die nicht veränderlich ist. Eine den unterschiedlichen Anforderungen verschiedener Pneumatikelemente anpassbare Öldosierung ist damit kaum möglich. Ein weiterer Nachteil solcher Druckluftöler ist die starke Temperaturabhängigkeit der Ölung bedingt durch die Viskositätsveränderung des Öls in Abhängigkeit der jeweiligen Temperatur.

Eine Additivzerstäubungsvorrichtung der eingangs genannten Art geht beispielsweise aus der US 3,841,438 hervor. Die Additivzerstäubungsvorrichtung durchströmende Druckluft durchströmt einen Hohlraum, in dem ein Öl-Auslass angeordnet ist.

Das Öl wird zu diesem Auslass durch eine Öl-Pumpenanordnung gepumpt. Die einzuspritzende Ölmenge ist durch eine Einstelleinrichtung einstellbar. Eine Luftsensoranordnung wird durch eine Erhöhung der Luft-Durchflußmenge aktiviert, wenn ein vorbestimmtes Durchfluß-Niveau erreicht ist. Dann wird von der durchströmenden Luft ein Teil abgezweigt, der auf einen Kolben der Öl-Pumpenanordnung wirkt, wodurch Öl nebelartig an dem Auslass ausgestoßen und in die Druckluft eingespritzt wird.

Es ist daher Aufgabe der Erfindung, Additiv, insbesondere Schmiermittel, in einem gasförmigen Druckmedium, insbesondere Druckluft möglichst optimal einstellbar zu verteilen.

Diese Aufgabe wird erfindungsgemäß bei der Additivzerstäubungsvorrichtung der eingangs genannten Art dadurch gelöst, dass die Erfassungseinrichtung als mindestens eine physikalische Größe die Konzentration des Additivs in dem Druckmedium ermittelt.

Die Aufgabe wird ferner gelöst durch eine fluidtechnische Einrichtung gemäß der technischen Lehre des Anspruchs 14, durch eine Aufbereitungseinheit gemäß der technischen Lehre des Anspruchs 16, durch eine kartuschenartige Additiv-Versorgungseinrichtung gemäß der technischen Lehre des Anspruchs 17 sowie durch ein Verfahren gemäß der technischen Lehre des Anspruchs 18.

Erfindungsgemäß wird also Additiv nicht durch einen Mitnahmeeffekt der Druckluft zerstäubt, sondern durch Einspritzung mittels einer Druckerzeugungsvorrichtung. Diese Druckerzeugungsvorrichtung ist durch eine Steuereinrichtung ansteuerbar, die in Abhängigkeit einer physikalischen Größe, nämlich der Konzentration des Additivs in dem Druckmedium und gegebenenfalls des momentanen Durchflusses des Druckmediums im Druckmedium-Strömungskanal, die Druckerzeugungsvorrichtung ansteuert. Dabei lässt sich mit geringem technischen Aufwand je nach Bedarf und reproduzierbar eine konstante Additivkonzentration in dem Druckmedium erzielen oder eine - auch kurzzeitig - stärkere oder schwächere Konzentration. Weiter kann durch Parametrierung der Steuereinrichtung oder durch eine sonstige, extern gegebene Vorgabe an die Steuereinrichtung die Schussfrequenz und/oder die Additiv-Tröpfchengröße sehr genau eingestellt werden. Wenn während einer Betriebspause kein Durchfluss des Druckmediums im Druckmedium-Strömungskanal vorhanden ist, wird entsprechend kein Additiv in das Druckmedium eingespritzt.

Erfindungsgemäß aufgebaute und arbeitende Vorrichtungen weisen nur wenige störanfällige mechanische Komponenten auf. Durch die "aktive" Einspritzung des Additivs per Druckerzeugungsvorrichtungen wird ferner sofort und genau dosiert Additiv dem Druckmedium zugeführt und nicht erst wenn dieses durch eigenen Durchfluss, wie im Stand der Technik, Additiv "mitnimmt". Die erfindungsgemäßen Vorrichtungen sprechen daher sehr schnell an und verursachen keine oder nur geringe Strömungsverluste des Druckmediums.

Weitere zweckmäßige Ausgestaltungen ergeben sich aus den Unteransprüchen.

Für die Druckerzeugungsvorrichtung können insbesondere piezoelektrische, magnetostriktive, oder memory-metallische Elemente eingesetzt werden. Diese können beispielsweise in Form einer Membran oder Lamelle ausgebildet sein und einen Druckimpuls auf das Additiv in dem Additiv-Durchlasskanal ausüben. Kombinationen aus den vorgenannten Materialien sind ebenfalls möglich.

In einer bevorzugten Variante der Erfindung enthält die Druckerzeugungsvorrichtung eine Lamelle aus den vorgenannten Materialien. Eine solche Lamelle ist dann beispielsweise in Form eines Biegewandlers ausgeführt, der das Additiv in Richtung des Auslasses fördert. Der Biegewandler kann so ausgebildet sein, dass er den Auslass in Ruhestellung verschließt. Der Biegewandler ist dazu entsprechend vorgespannt oder wird durch eine elektrische Ruhespannung, ein magnetisches Feld oder eine Konstanttemperatur in eine den Auslass verschließende Stellung gebracht.

Die Druckerzeugungsvorrichtung kann jedoch auch nach einem Verdampfungsprinzip arbeiten, bei dem entweder eine Dampfblase im Additiv oder in einer Arbeitsflüssigkeit, beispielsweise Wasser, durch ein impulsartig erhitztes Heizelement gebildet wird. Durch die Dampfblase wird dann das Additiv in Richtung des Auslasses gedrückt. Sofern eine Arbeitsflüssigkeit verwendet wird, ist diese beispielsweise durch eine Membran von dem Additiv in dem Additiv-Durchlasskanal getrennt. Auf die chemische sowie die physikalische Qualität des Additivs braucht dann hinsichtlich der Dampfblasenerzeugung keinerlei Rücksicht mehr genommen werden.

In einer weiteren Variante der Erfindung wird das Additiv durch Erwärmung - oder auch Abkühlung - derart eingestellt, dass es in den Additiv-Durchlasskanälen oder auch beim Einspritzen in das Druckmedium eine optimale Konsistenz aufweist. Zweckmäßigerweise wird das Additiv dabei im Bereich des jeweiligen Additiv-Durchlasskanals erhitzt, so dass die Druckerzeugungsvorrichtung eine optimale Wirkung entfaltet. Zur Erfassung und anschließenden Steuerung der Temperatur kann zusätzlich ein Sensor in dem jeweiligen Additiv-Durchlasskanal angeordnet sein. Es kann jedoch auch die gesamte Additivzerstäubungsvorrichtung insgesamt erwärmt oder abgekühlt werden. Zur Umgebung hin ist die Additivzerstäubungsvorrichtung dann vorzugsweise durch einen Isolationsmantel thermisch isoliert.

Das Additiv wird vorteilhafterweise aus kartuschenartigen, auswechselbaren Behältern zugeführt. Dabei können mehrere solche Behälter an eine gemeinsame Versorgungsleitung angeschlossen werden. Es ist jedoch auch möglich, dass ein solcher Behälter einen Einspritzkopf aufweist, der zusammen mit dem Behälter an die jeweilige Additivzerstäubungsvorrichtung angesetzt wird. Somit kann auch der Einspritzkopf, der einem gewissen Verschleiß durch das Additiv unterliegen oder der durch das Additiv zumindest teilweise verstopft werden kann, zusammen mit dem Behälter in sehr einfacher Weise ausgewechselt werden.

Zur Förderung des Additivs in den Additiv-Durchlasskanal wird die Additiv-Versorgungseinrichtung eingangsseitig in einer bevorzugten Variante der Erfindung mit dem Druckmedium aus dem Druckmedium-Strömungskanal beaufschlagt. Es ist jedoch auch möglich, dass das Additiv allein durch auf die Additiv-Versorgungseinrichtung wirkenden Umgebungsdruck aus der Versorgungseinrichtung in den Additiv-Durchlasskanal hineingefördert wird. Weiterhin kann der Additiv-Durchlasskanal auch zumindest in einem Teilbereich kapillar ausgebildet sein, so dass durch Kapillarwirkung Additiv aus der Additiv-Versorgungseinrichtung in den Additiv-Durchlasskanal gefördert wird.

Da die Additivzerstäubungsvorrichtung sehr kompakt ausgeführt sein kann, ist es auch möglich, sie direkt in eine fluidtechnische Einrichtung beispielsweise in Gestalt eines Ventils oder eines Antriebs, einzubauen. Sie kann jedoch auch in eine Aufbereitungseinheit, beispielsweise in einen Öler für ein Pneumatiksystem, eingebaut sein.

Insbesondere dann, wenn die Steuereinrichtung nur wenige Bauelemente aufweist, beispielsweise einen kleinen Mikrocontroller oder einige wenige analoge elektrische Reglerkomponenten enthält, kann auch die Steuereinrichtung direkt in die Additivzerstäubungsvorrichtung oder in eine die Additivzerstäubungsvorrichtung enthaltende Baugruppe integriert sein. Es ist jedoch auch möglich, dass die Steuereinrichtung zentral, beispielsweise durch eine Mikroprozessor-Steuerung, gebildet wird, die mehrere Additivzerstäubungsvorrichtungen ansteuert. Es kann auch jeweils einer Additivzerstäubungsvorrichtung ein kleiner, diese steuernder Mikroprozessor zugeordnet sein, der durch eine übergeordnete Steuerung z.B. über einen Feldbus gesteuert wird. An dieser übergeordneten Steuerung kann dann beispielsweise die Additivkonzentration im Druckmedium genau vorgegeben und eine aktuell vorhandene Additivkonzentration z.B. über ein Display kontrolliert werden.

Ausführungsbeispiele der Erfindung werden nun anhand der Zeichnungen erläutert. Es zeigen:
- Figur 1: ein erstes, schematisiertes Ausführungsbeispiel einer erfindungsgemäßen Additivzerstäubungsvorrichtung,
- Figur 2A: einen Additiv-Durchlasskanal in Form einer Kammer mit einer Lamelle als Aktor,
- Figur 2B: den Additiv-Durchlasskanal aus Figur 2A, wobei die Lamelle Auslassöffnungen des Additiv-Durchlasskanals verschließt,
- Figur 3: einen Additiv-Durchlasskanal in Form einer Kapillare mit einem Heizelement,
- Figur 4: ein schematisiertes Ausführungsbeispiel eines Einspritzkopfes mit einer angeschlossenen Kartusche sowie
- Figur 5: ein dem Ausführungsbeispiel aus Figur 1 ähnliches Ausführungsbeispiel einer erfindungsgemäßen Additivzerstäubungsvorrichtung, jedoch mit separaten Additiv-Versorgungseinrichtungen, jeweils ausgestattet mit einem Einspritzkopf.

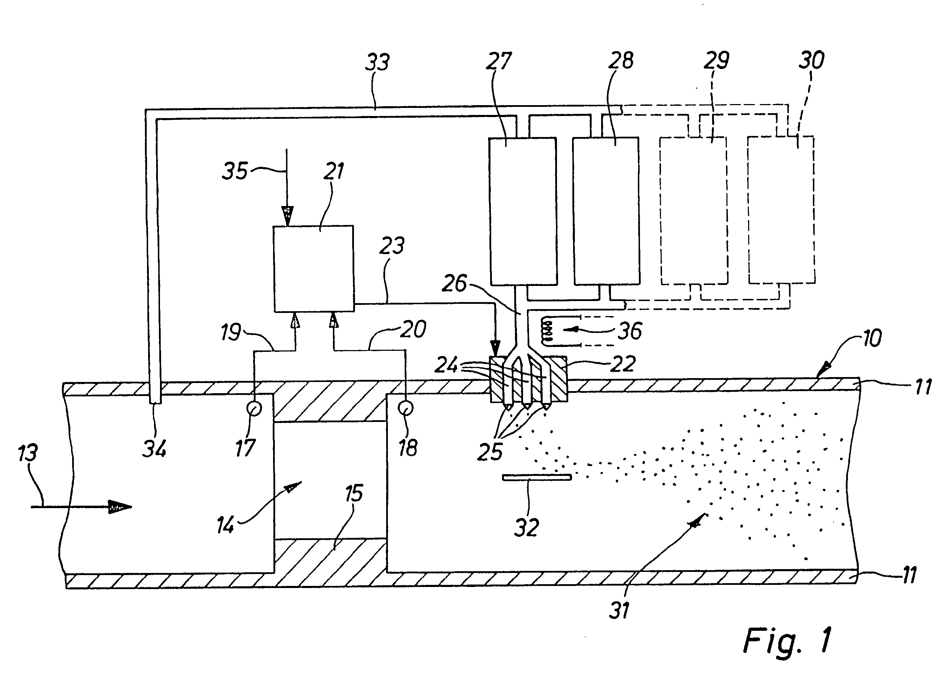

Figur 1 zeigt eine Additivzerstäubungsvorrichtung mit einem Druckmedium-Strömungskanal 10, der durch eine Wandung 11 begrenzt ist. Der Druckmedium-Strömungskanal 10 wird in Pfeilrichtung 13 von einem gasförmigen Druckmedium, insbesondere Druckluft durchströmt. Der Druckmedium-Strömungskanal ist beispielsweise Bestandteil eines Wartungsgerätes für pneumatische Systeme, beispielsweise ein Öler, oder Teil einer fluidtechnischen Einrichtung, beispielsweise in Gestalt eines Ventils oder eines Antriebes. Das Druckmedium strömt dann in Pfeilrichtung 13 zu einem oder mehreren solchen Ventilen oder Antrieben.

Der Druckmedium-Strömungskanal 10 weist eine Engstelle 14 auf, die durch eine blendenartige Ausbuchtung 15 gebildet wird, die sich an der Wandung 11 befindet. Bedingt durch die Engstelle 14 entsteht ein Druckgefälle in dem Strömungskanal 10, das durch eine Erfassungseinrichtung bildende Druck-Sensoren 17 und 18 gemessen wird. Die Sensoren 17 und 18 sind durch jeweils eine Verbindung 19 bzw. 20 mit einer Steuereinrichtung 21 verbunden. Die Verbindungen 19 und 20 sind Meldeeinrichtungen und können beispielsweise Leitungs-, Funk- oder auch Infrarot-Verbindungen sein. Die Steuereinrichtung 21 ist beispielsweise ein Mikroprozessor oder auch eine analoge Regeleinrichtung. Anhand der Druckdifferenz, die zwischen den Sensoren 17 und 18 gemessen wird, kann die Steuereinrichtung 21 ermitteln, wie stark der momentane Durchfluss des Druckmediums durch den Druckmedium-Strömungskanal 10 ist. Anstatt der Druck-Sensoren 17 und 18 könnte zur Durchflusserfassung beispielsweise auch ein durch das Druckmedium angetriebener elektrischer Generator oder ein Heizdrahtelement in dem Druckmedium-Strömungskanal 10 angeordnet sein.

Die Steuereinrichtung 21 ist weiter mit einem Einspritzkopf 22 über eine Verbindung 23 verbunden. Wie die Verbindungen 19 und 20 kann auch die Verbindung 23 eine Leitungs-, Funk- oder Infrarot-Verbindung sein. Der Einspritzkopf 22 weist im konkreten Anwendungsfall drei parallele Additiv-Durchlasskanäle 24 auf. Es ist jedoch auch möglich, dass der Einspritzkopf 22 nur einen Additiv-Durchlasskanal oder eine Vielzahl von Additiv-Durchlasskanälen aufweist. In Richtung des Strömungskanals 10 weisen die Additiv-Durchlasskanäle 24 jeweils einen Auslass 25 auf. Eingangsseitig sind die Additiv-Durchlasskanäle 24 an eine Versorgungsleitung 26 angeschlossen, die zu Additiv-Versorgungsbehältern 27, 28, 29 und 30 führt. Die Versorgungsbehälter sind vorzugsweise als auswechselbare Kartuschen ausgeführt, und können auf die Versorgungsleitung 26 durch an dieser angebrachte, in Figur 1 nicht dargestellte Flansche aufgesteckt oder aufgeschraubt werden. Aus den Versorgungsbehältern 27 bis 30 gelangt Additiv, z.B. Öl, über die Versorgungsleitung 26 in die Additiv-Durchlasskanäle 24. Anstatt der Versorgungsbehälter 27 bis 30 kann auch eine zentrale Additiv-Versorgungseinrichtung vorgesehen sein, die neben der in Figur 1 dargestellten Additivzerstäubungsvorrichtung auch weitere Additivzerstäubungsvorrichtungen mit Additiv versorgt.

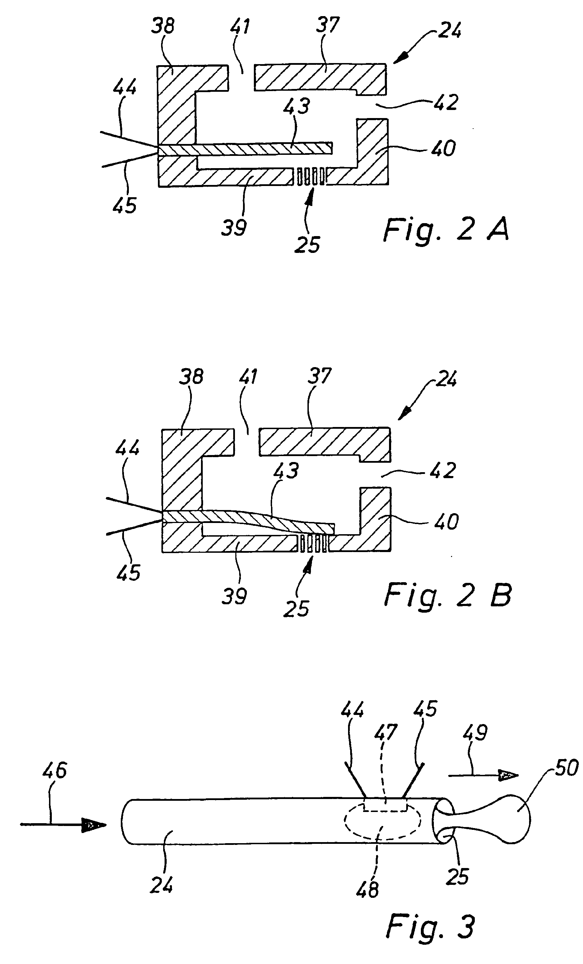

In den Additiv-Durchlasskanälen 24 befinden sich jeweils Druckerzeugungsvorrichtungen, die anhand der Figuren 2A, 2B und 3 noch näher erläutert werden. Durch die Druckerzeugungsvorrichtungen wird jeweils ein Druckimpuls auf das Additiv im jeweiligen Additiv-Durchlasskanal 24 ausgeübt, so dass pro Druckimpuls ein Additiv-Tropfen an dem jeweiligen Auslass 25 in den Druckmedium-Strömungskanal 10 ausgestoßen wird. Die Additiv-Tropfen sind in der Zeichnung mit einem Sammelindex 31 versehen. Nach Austreten aus den Auslässen 25 werden die Additiv-Tropfen 31 durch eine Umlenkeinrichtung, die in Figur 1 eine Umlenkplatte 32 ist, im Druckmedium-Strömungskanal 10 in Pfeilrichtung 13 umgelenkt, und in dem Druckmedium verteilt.

Über eine Versorgungsleitung 33, in die über eine Öffnung 34 Druckmedium eintritt, sind die Additiv-Versorgungsbehälter 27 bis 30 mit Druckmedium beaufschlagt, so dass Additiv aus den Versorgungsbehältern 27 bis 30 heraus in die Versorgungsleitung 26 und damit in die Additiv-Durchlasskanäle 24 gedrückt wird. Eine solche Anordnung zur Versorgung mit Additiv kann auch als quasi-isobar bezeichnet werden, da die Druckverhältnisse in dem Strömungskanal 10 sich unmittelbar auf die Additiv-Versorgung auswirken. Es ist auch möglich, dass in der Versorgungsleitung 33 ein Druckminderer angebracht ist. Weiter ist es möglich, dass die Versorgungsleitung 33 nicht in den Strömungskanal 10 mündet, sondern zur Umgebung hin geöffnet ist, so dass durch Umgebungsdruck Additiv in die Versorgungsleitung 26 aus den Versorgungsbehältern 27 bis 30 heraus gedrückt wird.

Die Druckerzeugungsvorrichtungen in den Additiv-Durchlasskanälen 24 werden durch die Steuereinrichtung 21 über die Verbindung 23 und innerhalb des Einspritzkopfes 22 befindliche, nicht dargestellte Verbindungen gesteuert. Als Eingangsgröße für die Ansteuerung der Druckerzeugungsvorrichtungen wertet die Steuereinrichtung 21 die von den Sensoren 17 und 18 gelieferten Messergebnisse aus. Wenn die Sensoren 17 und 18 beispielsweise Drucksensoren sind, so entsteht bei Durchströmen des Strömungskanals 10 mit Druckmedium ein Druckgefälle zwischen diesen Sensoren, aus dem die Steuereinrichtung 21 auf den momentanen Durchfluss im Druckmedium-Strömungskanal 10 schließt. Ist der Durchfluss groß, so ist auch der Bedarf an einzuspritzendem Additiv in den Strömungskanal 10 groß und die steuereinrichtung 21 steuert die Druckerzeugungsvorrichtungen in den Additiv-Durchlasskanälen 24 derart an, dass diese zahlreiche Additiv-Tropfen in den Strömungskanal 10 einspritzen. Dabei legt die Steuereinrichtung 21 beispielsweise hochfrequente Spannungsimpulse die Druckerzeugungsvorrichtung an.

Es ist auch möglich, dass die Steuereinrichtung 21 durch eine übergeordnete Steuerung, dargestellt durch einen Pfeil 35, dazu angewiesen wird, eine bestimmte Additivkonzentration in dem Strömungskanal 10 herbeizuführen. Ferner ist es auch möglich, dass in dem Einspritzkopf 22 eine lokale Substeuerung integriert ist, die die jeweiligen Druckerzeugungsvorrichtungen lokal ansteuert in Abhängigkeit von Befehlen, die von der Steuereinrichtung 21 gegeben werden.

Figur 1 zeigt weiter eine Heizung 36, die in Form einer Heizschlange schematisiert dargestellt ist. In dem Beispiel aus Figur 1 wirkt die Heizschlange auf die Versorgungsleitung 26 und heizt das Additiv in der Versorgungsleitung 26 auf, so dass eine bestimmte, in den Additiv-Durchlasskanälen 24 oder in den Strömungskanal 10 gewünschte Viskosität des Additivs einstellbar ist. Es ist auch möglich, dass zusätzlich zu der Heizung 36 oder anstatt derer eine Kühlvorrichtung an der Versorgungsleitung 26 angebracht ist, um die Temperatur des Additivs in der Versorgungsleitung abzusenken und so eine bestimmte Viskosität des Additivs herbeizuführen.

Weiter kann die Heizung oder auch die Kühlvorrichtung 36 unmittelbar im Einspritzkopf 21 und dort vorzugsweise im Bereich der Additiv-Durchlasskanäle 24 angeordnet sein, so dass in der Nähe der Auslässe 25 die gewünschte Viskosität des Additivs einstellbar ist. Vorzugsweise sind dann im Bereich der Additiv-Durchlasskanäle, möglichst in der Nähe der Auslässe 25, Temperatursensoren vorgesehen, die ein Einregeln einer gewünschten Temperatur ermöglichen. Die Heizung bzw. Kühlung 36 kann durch die Steuereinrichtung 21 angesteuert werden. Ebenfalls können die Temperatursensoren im Bereich des Einspritzkopfes 22 mit der Steuereinrichtung 21 verbunden sein. Vorzugsweise ist der Einspritzkopf 22 oder gar die gesamte, in Figur 1 dargestellte Additivzerstäubungseinrichtung in ein nach außen hin thermisch isolierendes Gehäuse eingebaut.

Anhand der Figuren 2A und 2B wird im Folgenden eine beispielhafte Ausführung eines Additiv-Durchlasskanals dargestellt, beispielsweise eines Additiv-Durchlasskanals 24 des Einspritzkopfes 22 aus Figur 1. In den Figuren 2A und 2B ist der Additiv-Durchlasskanal 24 in Form einer Kammer dargestellt, die durch jeweils im Querschnitt L-förmige Wandungsbereiche 37, 38, 39 und 40 gebildet wird. Zwischen den Wandungsbereichen 37 und 38 befindet sich ein Einlass 41, durch den Additiv aus einer nicht dargestellten Additiv-Versorgungsleitung, beispielsweise der Versorgungsleitung 26, in den Additiv-Durchlasskanal 24 gelangt. Durch die Wandungsbereiche 37 und 40 wird ein Überlauf 42 begrenzt, durch den überschüssiges Additiv aus dem Additiv-Durchlasskanal 24 in einen nicht dargestellten Überlaufbereich ausströmen kann.

Durch die Wandungsbereiche 38 und 39 wird eine Lamelle 43 gehalten, die zweischichtig aus piezoelektrischem Material aufgebaut ist.

Die Lamelle 43 weist Kontakte 44 und 45 auf, an die eine elektrische Spannung angelegt werden kann, beispielsweise durch die Steuereinrichtung 21. Wird eine solche elektrische Spannung angelegt, so verformt sich die Lamelle 43. Zwischen den Wandungsbereichen 39 und 40 befindet sich der Auslass 25, in dem Ausführungsbeispiel aus den Figuren 2A und 2B in Form eines Düsenfeldes mit mehreren eng beieinanderliegenden Auslassöffnungen. Nach hinten sowie nach vorne hin, also im Bereich einer hinter der Zeichenebene liegenden Ebene sowie vor der Zeichenebene liegenden Ebene wird der Additiv-Durchlasskanal 24 durch in den Figuren 2A und 2B nicht dargestellte Wandungen begrenzt. Es ist auch möglich, dass mehrere Additiv-Durchlasskanäle 24 hintereinander angeordnet sind, durch einen gemeinsamen Einlass 41 mit Additiv versorgt werden und einen gemeinsamen Überlauf 42 aufweisen, wobei jeweils eine Lamelle 43 auf einen Auslass 25 mit jeweils einem Düsenfeld wirkt.

Wird eine Spannung an den Kontakten 44 und 45 angelegt, so bewegt sich die Lamelle 43 von dem düsenfeldartigen Auslass 25 weg. Der dann unter der Lamelle entstehende Raum füllt sich mit Additiv. Damit das Additiv nicht den einfacheren Weg zurück durch den Einlass 41 oder den Überlauf 42 nehmen kann, sind dort nicht dargestellte Drosselstellen ausgeführt. Danach werden die Kontakte 44 und 45 kurzgeschlossen, so dass die Lamelle 43 wieder in ihre Ausgangslage zurückschwingt und dabei Additiv durch den Auslass drückt. Ein solcher Zustand ist in Figur 2B dargestellt. An den Auslassöffnungen des Auslasses 25 bilden sich dabei feine Additiv-Tröpfchen, die sich im Druckmedium des Strömungskanals 10, der in Figur 2A und 2B nicht dargestellt ist, verteilen. Durch jeweils kurzzeitiges Anlegen von Spannung an die Kontakte 44 und 45 sowie durch nachfolgendes kurzzeitiges Kurzschließen der Kontakte führt die Lamelle 43 eine paddelartige Schwingbewegung in Bezug auf den Auslass 25 durch, so dass in Abhängigkeit von der Spannungsfrequenz und -höhe an den Kontakten 44 und 45 feinste Additiv-Tröpfchen an dem Auslass 25 gebildet und in den Druckmedium-Strömungskanal 10 eingespritzt werden.

Wie oben dargestellt, kann die Lamelle 43 durch Anlegen einer Spannung an den Kontakten 44 und 45 aus der in Figur 2A dargestellten Lage von dem Auslass 25 weg oder zu diesem hin bewegt werden. Dazu eignet sich beispielsweise ein Spannungs-rechteckimpuls, bei dessen ansteigender Flanke die Lamelle von dem Auslass 25 weg bewegt wird, bei dessen Konstantphase die Lamelle kurzzeitig in von dem Auslass 25 abgewandter Stellung gehalten wird und bei dessen abfallender Flanke die Lamelle hin zu dem Auslass 25 schwingt. Das Rechteck-Grundsignal des Spannungsimpulses kann zur Dosierung des Additivs am Auslass 25 folgendermaßen modifiziert werden:
- pulsierender Betrieb: "Pakete" gleichartiger Spannungs-Rechteckimpulse, die in gleicher Frequenz erzeugt werden, werden an die Lamelle 43 angelegt. Durch Veränderung der Anzahl der Spannungs-Rechteckimpulse eines Pakets oder der Pausenzeit zwischen den jeweiligen Paketen kann die durch den Auslass 25 tretende Additivmenge gesteuert werden.
- Pulsbreitenmodulation: die Additiv-Dosierung am Auslass 25 wird durch Verändern der Breite der Spannungs-Rechteckimpulse gesteuert. Ebenfalls kann die Pausenzeit zwischen zwei Spannungs-Rechteckimpulsen verändert werden. Modulationsformen, bei denen sowohl die Breiten der Spannungs-Rechteckimpulse als auch die Pausen zwischen diesen verändert werden, sind ebenfalls möglich.
- Amplitudenmodulation: Bei Amplitudenmodulation weisen die Rechteck-Spannungsimpulse jeweils gleiche Breite auf und werden in gleicher Frequenz erzeugt, jedoch wird die Spannungshöhe der Rechteck-Spannungsimpulse verändert. Analog ändert sich dann die Auslenkung der Lamelle 43 bezüglich des Auslasses 25 und damit die aus dem Auslass 25 ausgespritzte Additivmenge.

Mischformen zwischen den oben genannten Modulationen sowie dem pulsierenden Betrieb sind genauso wie andere Formen der Beeinflussung der Rechteck-Spannungsimpulse möglich.

Um ein Nachlaufen des Additivs durch den Auslass 25 auch bei abgeschalteter Additivzerstäubungsvorrichtung zu verhindern, kann es erforderlich sein, den Auslass 25 bei Nichtbetrieb abzudichten. Dies kann erreicht werden, indem die Lamelle 43 auf der dem Auslass 25 zugewandten Seite mit einem geeigneten Dichtmaterial beschichtet wird, und die Lamelle 43 entsprechend vorgespannt auf dem Auslass 25 aufliegt. Wegen Bruchgefahr der Lamelle 43 sollte diese jedoch bei der Ausstoßbewegung zum Auslass 25 hin nicht auf diesen aufschlagen.

Ein Aufschlagen kann folgendermaßen verhindert werden: Die Lamelle 43 hat in ihrer Ruhelage einen Abstand von dem Auslass 25, so dass die Lamelle 43 ein wenig über die Ruhelage hinaus überschwingen kann. Figur 2A zeigt die Lamelle 43 in Ruhelage. Zum Abdichten des Auslassen 25 muss dann eine negative Spannung an den Kontakten 44 und 45 angelegt werden, die die Lamelle 43 zum Auslass 25 hin auslenkt bis diese aufliegt. Dieser Zustand ist in Figur 2B dargestellt. Alternativ kann die Lamelle 43 auch mechanisch vorgespannt sein, so dass sie, wie in Figur 2B dargestellt, auf dem Auslass 25 in Ruhelage aufliegt. Die Lamelle 43 muss deshalb mit einer Offsetspannung betrieben werden, die ein Aufschlagen der Lamelle 43 auf den Auslass 25 im Betrieb verhindert. Die Mittellage der Schwingungsbewegung ist dabei von dem Auslass 25 abgehoben.

Wie aus den Figuren 2A und 2B ersichtlich, kann der Additiv-Durchlasskanal 24 sowie ein Einspritzkopf, der einen solchen Additiv-Durchlasskanal enthält, sehr kompakt aufgebaut sein, nämlich im Größenbereich von Mikrometern. Dadurch ist es möglich, den Additiv-Durchlasskanal 24 direkt in eine fluidtechnische Einrichtung, beispielsweise einen Pneumatikzylinder direkt einzubauen. So kann beispielsweise dem Pneumatikzylinder gezielt immer zu Beginn seines Arbeitshubes Additiv zugeführt werden. Selbst ein Einbau in eine Mikroventil-Anordnung ist ohne Weiteres möglich.

Figur 3 zeigt eine weitere Ausführungsform des Additiv-Durchlasskanals 24 und einer Druckerzeugungsvorrichtung. In Figur 3 ist der Additiv-Durchlasskanal 24 ein langgestreckter, vorzugsweise kapillarer Kanal, aus dem aus Richtung 46 Additiv, beispielsweise aus der Versorgungsleitung 26 zugeführt wird. Im Additiv-Durchlasskanal 24 befindet sich ein Heizwiderstand 47 an den über die aus den Figuren 2A und 2B bekannte Kontakte 44 und 45 durch die Steuereinrichtung 21 Spannungs-Rechteckimpulse angelegt werden können.

Durch einen solchen Spannungs-Rechteckimpuls heizt sich der Widerstand 47 kurzzeitig derart auf, dass in dem Additiv eine Dampfblase 48 gebildet wird, so dass in Richtung 49 ein Additiv-Tropfen 50 aus dem Auslass 25 ausgestoßen wird. Bei abfallender Flanke eines Spannungs-Rechteckimpulses sowie bei der Ruhephase kühlt der Widerstand 47 wieder ab, so dass die Dampfblase 48 wieder in das in dem Additiv-Durchlasskanal 24 befindliche Additiv rekondensiert. Dabei wird Additiv durch den Kapillareffekt des Additiv-Durchlasskanals 24 aus Richtung 46 in den Additiv-Durchlasskanal 24 gezogen.

Es ist auch möglich, dass sich über dem Heizwiderstand 47 eine Arbeitsflüssigkeit befindet, beispielsweise Wasser, das durch eine Membrane über dem Heizwiderstand 47 gehalten wird. Wird das Wasser kurzzeitig durch den Heizwiderstand 47 erwärmt, bildet sich eine Dampfblase, die die Membrane ausdehnt und zum Ausstoß des Additiv-Tropfens 50 führt. Auf die physikalischen Eigenschaften des Additivs bracht in diesem Fall keine Rücksicht genommen zu werden, da die Dampfblasenerzeugung nur von der Qualität der Arbeitsflüssigkeit abhängt. Ferner kann der Heizwiderstand nicht durch chemische oder physikalische Einwirkung des Additivs beschädigt werden.

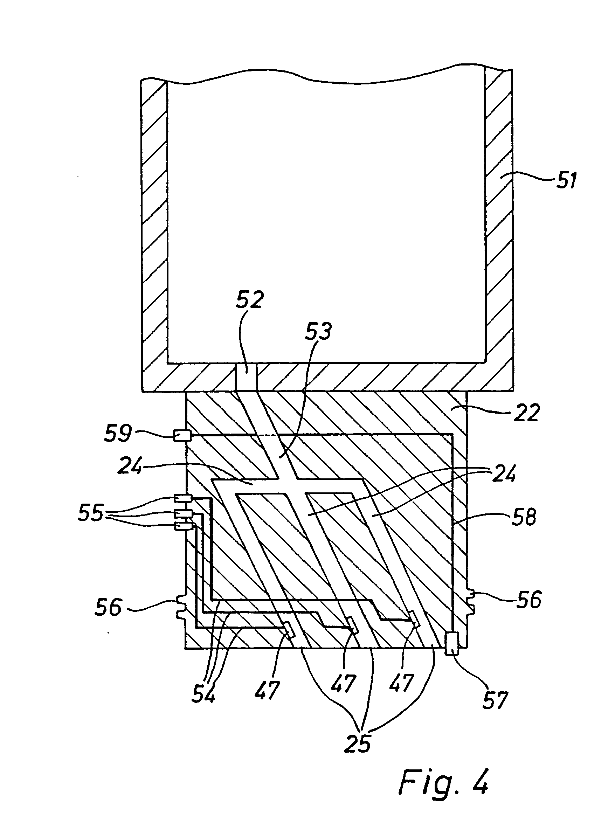

Figur 4 zeigt den Einspritzkopf 22 direkt, also ohne eine zwischengeschaltete Versorgungsleitung 26, verbunden mit einem kartuschenartigen Versorgungsbehälter 51, der mit Additiv befüllt ist. Ein Einlass 52 eines Additiv-Versorgungskanals 53 mündet in den Versorgungsbehälter 51 und versorgt in dem Beispiel aus Figur 4 drei parallel im Einspritzkopf 22 schräg angeordnete Additiv-Durchlasskanäle 24. Auslässe 25 der Additiv-Durchlasskanäle 24 münden in einen in der Figur nicht dargestellten Druckmedium-Strömungskanal. Der Einspritzkopf 22 kann entweder fest, z.B. durch Verklebung, mit dem Behälter 51 verbunden sein oder lösbar, beispielsweise durch eine Schraub- oder Bajonettverbindung.

In den Additiv-Durchlasskanälen 24 ist jeweils ein Heizwiderstand 47, wie aus Figur 3 bekannt, angeordnet, mit dem eine Dampfblase in den jeweiligen Additiv-Durchlasskanälen 24 erzeugt werden kann. Alternativ können jedoch auch jeweils piezoelektrische, magnetostriktive oder memorymetallische Lamellen oder Membranen, wie aus den Figuren 2A und 2B bekannt, in den jeweiligen Additiv-Durchlasskanälen 24 als Druckerzeugungsvorrichtungen angeordnet sein. Von den Heizwiderständen 47 führen Verbindungsleitungen 54 zu Kontakten 55, an die beispielsweise die Verbindungsleitung 23 zur Steuereinrichtung 21 angeschlossen werden kann. Der Einspritzkopf 22 ist über ein Gewinde 56 in eine Wandung eines Druckmedium-Strömungskanals einschraubbar, z.B. in die Wandung 11 des Druckmedium-Strömungskanals 10. Alternativ wäre auch beispielsweise eine Steck-, Rast- oder Bajonettverbindung möglich. Weiter weist der Einspritzkopf 22 einen Messaufnehmer 57 auf, der über eine Verbindungsleitung 58 mit einem Kontakt 59 verbunden ist. Mit dem Messaufnehmer 57 kann beispielsweise Druck oder Temperatur im jeweiligen Druckmedium-Strömungskanal gemessen werden. Über den Kontakt 59 kann der Messaufnehmer 57 mit der Steuereinrichtung 21 verbunden werden.

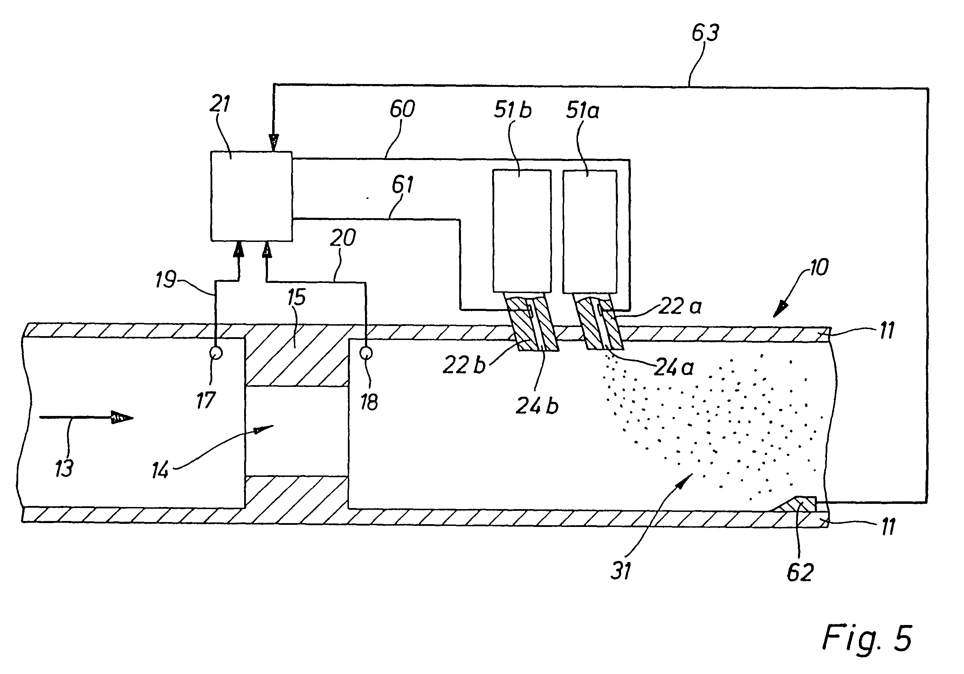

Figur 5 zeigt im Wesentlichen die aus Figur 1 bereits bekannte Additivzerstäubungsvorrichtung, jedoch sind anstatt der Versorgungsbehälter 27 bis 30 zwei der aus Figur 4 bekannten kartuschenartigen, mit jeweils einem Einspritzkopf 22a bzw. 22b versehenen Behälter 51a und 51b an dem Strömungskanal 10 angeordnet. Die Einspritzköpfe 22a und 22b sind jeweils stark vereinfacht dargestellt und weisen nur je einen Additiv-Durchlasskanal 24 auf. In beiden Additiv-Durchlasskanälen befinden sich nicht näher bezeichnete Heizwiderstände oder Lamellen zur Erzeugung von Druckimpulsen. Die Druckerzeugungsvorrichtungen werden jeweils über eine Verbindung 60 bzw. 61 durch die Steuereinrichtung 21 angesteuert.

Wie aus Figur 5 ersichtlich, ist nur der Einspritzkopf 22a in Betrieb und spritzt Additiv in den Strömungskanal 10 ein. Der Einspritzkopf 22b befindet sich im Stand-by-Betrieb und kann durch die Steuerung 21 bei höherem Additivbedarf im Strömungskanal 10 zugeschaltet werden. Auf diese Weise ist es auch sehr einfach möglich, jeweils eine der Kartuschen 51a oder 51b in nicht aktivem Zustand alleine oder zusammen mit dem jeweiligen Einspritzkopf 22a bzw. 22b auszutauschen und auf diese Weise verbrauchtes Additiv zu ersetzen.

Durch die Schrägstellung der Strömungskanäle 24a und 24b kann die aus Figur 1 bekannte Umlenkplatte 32 entfallen. Es ist auch möglich, dass das Additiv senkrecht zur Strömungsrichtung 13 des Druckmediums eingespritzt wird und allein durch die Strömung des Druckmediums umgelenkt und gleichmäßig im Strömungskanal 10 verteilt wird.

Im Strömungskanal 10 ist ferner ein Sensor 62 angebracht, der über eine Verbindung 63 Messwerte an die Steuereinrichtung 21 meldet. Beispielsweise kann sich an dem Sensor 62 Additiv niederschlagen, so dass sich die elektrische Leitfähigkeit an der Oberfläche des Sensors 62 verändert. Diesen Oberflächenwiderstand kann der Sensor 62 messen und an die Steuereinrichtung 21 melden. Diese ermittelt dann aus dem jeweiligen Widerstandswert die jeweils momentan im Strömungskanal 10 vorhandene Additivkonzentration. Die Steuereinrichtung 21 kann somit die Druckerzeugungsvorrichtungen so ansteuern, dass sich eine gleichmäßige Additivkonzentration im Strömungskanal 10 ergibt.

Der Steuereinrichtung 21 kann auch von einer externen Steuerung z.B. über eine Feldbusverbindung oder durch entsprechende Parametrierung ein Sollwert für die Additivkonzentration vorgegeben werden. Zusätzlich oder alternativ kann die Steuereinrichtung 21 auch den mittels der Sensoren 17 und 18 ermittelten Durchfluss des Druckmediums im Strömungskanal 10 zu einer geeigneten Ansteuerung der Druckerzeugungsvorrichtungen in den Einspritzköpfen 22a und 22b auswerten. Der Sensor 62 oder der aus Figur 4 bekannte Messaufnehmer 57 können auch die momentan im Strömungskanal 10 vorhandene Temperatur messen, in deren Abhängigkeit die Steuereinrichtung 21 dann die Druckerzeugungsvorrichtungen ansteuert.

## Patentansprüche

1. Additivzerstäubungsvorrichtung zur Zerstäubung eines flüssigen Additivs, insbesondere eines Schmiermittels, in einem gasförmigen Druckmedium, insbesondere Druckluft, mit mindestens einem Additiv-Durchlasskanal (24), der einen Einlass (26) zur Einspeisung des Additivs aus einer Additivversorgungseinrichtung (27, 28) aufweist und dessen Auslass (25) in einen Druckmedium-Strömungskanal (10) mündet, der von dem Druckmedium durchströmt wird, wobei dem Druckmedium-Strömungskanal (10) eine Erfassungseinrichtung (17, 18) zur Ermittlung mindestens einer physikalischen Größe zugeordnet ist, die die Erfassungseinrichtung (17, 18) über eine Meldeeinrichtung (19, 20) an eine Steuereinrichtung (21) melden kann, und wobei in dem mindestens einen Additiv-Durchlasskanal (24) eine Druckerzeugungsvorrichtung (43, 47) vorgesehen ist, mit der ein einen Additiv-Tropfen am Auslass (25) ausstoßender Druckimpuls auf das Additiv ausgeübt werden kann und die durch die Steuereinrichtung (21) in Abhängigkeit von der mindestens einen durch die Erfassungseinrichtung (17, 18) ermittelten physikalischen Größe steuerbar ist, **dadurch gekennzeichnet, dass** die Erfassungseinrichtung (17, 18) als mindestens eine physikalische Größe die Konzentration des Additivs in dem Druckmedium ermittelt.

2. Additivzerstäubungsvorrichtung nach Anspruch 1, **dadurch gekennzeichnet, dass** die Druckerzeugungsvorrichtung (43, 47) zumindest ein piezo-elektrisches und/oder magnetostriktives und/oder memory-metallisches Element (43) und/oder ein das Additiv oder eine separate Arbeitsflüssigkeit verdampfendes Heizelement (47) zur Erzeugung des Druckimpulses enthält.

3. Additivzerstäubungsvorrichtung nach Anspruch 1 oder 2, **dadurch gekennzeichnet, dass** die Erfassungseinrichtung (17, 18) als mindestens eine physikalische Größe den momentanen Durchfluss des Druckmediums durch den Druckmedium-Strömungskanal (10) ermittelt.

4. Additivzerstäubungsvorrichtung nach Anspruch 1, 2 oder 3, dass eine Heizvorrichtung und/oder Kühlvorrichtung (36) vorgesehen ist, die das Additiv, zweckmäßigerweise zumindest in einem Abschnitt des Additiv-Durchlasskanals (24), zur Viskositätskonditionierung temperiert.

5. Additivzerstäubungsvorrichtung nach einem der Ansprüche 1 bis 4, **dadurch gekennzeichnet, dass** die Additiv-Versorgungseinrichtung (27, 28) als Bestandteil der Additivzerstäubungsvorrichtung ausgebildet ist und zumindest einen lösbaren, einen zur Aufnahme eines Additivvorrates vorgesehenen kartuschenartigen Behälter (27, 28) aufweist.

6. Additivzerstäubungsvorrichtung nach einem der Ansprüche 1 bis 5, **dadurch gekennzeichnet, dass** der Additiv-Durchlasskanal (24) in einem Einspritzkopf (22) ausgebildet ist, der eine Anschlusspartie für zumindest einen lösbaren, zur Aufnahme eines Additivvorrates vorgesehenen kartuschenartigen Behälter (51) aufweist, die mit dem mindestens einen Einlass (26) des Additiv-Durchlasskanals (24) in Verbindung steht.

7. Additivzerstäubungsvorrichtung nach einem der Ansprüche 1 bis 6, **dadurch gekennzeichnet, dass** sie eine Verbindungsleitung (33) zu dem Druckmedium-Strömungskanal (10) aufweist, über die die Additiv-Versorgungseinrichtung (27, 28) derart mit dem Druckmedium beaufschlagt werden kann, dass das Additiv aus der Additiv-Versorgungseinrichtung (27, 28) heraus einen Druck in Richtung des Additiv-Durchlasskanals (24) erfährt.

8. Additivzerstäubungsvorrichtung nach einem der Ansprüche 1 bis 7, **dadurch gekennzeichnet, dass** der Additiv-Durchlasskanal (24) zumindest in einem Teilbereich kapillar ausgebildet ist, so dass nach Ausstoß eines Additiv-Tropfens (50) aus dem Auslass (25) durch Kapillarwirkung Additiv aus der Additiv-Versorgungseinrichtung (27, 28) in den Additiv-Durchlasskanal (24) gefördert wird.

9. Additivzerstäubungsvorrichtung nach einem der Ansprüche 1 bis 8, **dadurch gekennzeichnet, dass** in dem Additiv-Durchlasskanal (24) als Druckerzeugungsvorrichtung (43, 47) zumindest eine piezo-elektrisch und/oder magnetostriktiv und/oder memory-metallisch betätigbare Lamelle (43) vorgesehen ist.

10. Additivzerstäubungsvorrichtung nach Anspruch 9, **dadurch gekennzeichnet, dass** die zumindest eine piezo-elektrisch und/oder magnetostriktiv und/oder memory-metallisch betätigbare Lamelle (43) so angeordnet ist, dass die Lamelle den Auslass (25) bei Anlegen einer elektrischen Ruhespannung und/oder eines magnetischen Ruhefeldes und/oder einer Ruhetemperatur verschließt.

11. Additivzerstäubungsvorrichtung nach Anspruch 9, **dadurch gekennzeichnet, dass** die zumindest eine Lamelle (43) in eine den Auslass (25) verschließende Stellung vorgespannt ist.

12. Additivzerstäubungsvorrichtung nach einem der vorhergehenden Ansprüche, **dadurch gekennzeichnet, dass** in dem Druckmedium-Strömungskanal (10) eine Umlenkvorrichtung (32) vorgesehen ist, durch die an dem mindestens einen Auslass (25) ausgestoßene Additiv-Tropfen aus deren Ausstoßbahn heraus umgelenkt werden.

13. Additivzerstäubungsvorrichtung nach einem der vorhergehenden Ansprüche, **dadurch gekennzeichnet, dass** die Additivzerstäubungsvorrichtung die Steuereinrichtung (21) enthält.

14. Fluidtechnische Einrichtung, beispielsweise in Gestalt eines Ventils oder eines Antriebes, der zumindest eine Additivzerstäubungsvorrichtung nach einem der Ansprüche 1 bis 13 zugeordnet ist, wobei der Druckmedium-Strömungskanal (10) unmittelbar in der fluidtechnischen Einrichtung ausgebildet ist.

15. Fluidtechnische Einrichtung nach Anspruch 14, **dadurch gekennzeichnet, dass** die zumindest eine Additivzerstäubungsvorrichtung als Bestandteil der fluidtechnischen Einrichtung ausgebildet ist.

16. Aufbereitungseinheit, beispielsweise Öler, für ein gasförmiges Druckmedium, insbesondere für Druckluft, **dadurch gekennzeichnet, dass** die Aufbereitungseinheit zumindest eine Additivzerstäubungsvorrichtung nach einem der Ansprüche 1 bis 13 aufweist.

17. Additiv-Versorgungseinrichtung (27, 28) für eine Additivzerstäubungsvorrichtung nach einem der Ansprüche 1 bis 13, für eine fluidtechnische Einrichtung nach Anspruch 14 oder 15 oder für eine Aufbereitungseinheit nach Anspruch 16, **dadurch gekennzeichnet, dass** die Additiv-Versorgungseinrichtung (27, 28) zumindest einen Einspritzkopf (22) aufweist, in dem der Additiv-Durchlasskanal (24) ausgebildet ist und der eine Anschlusspartie für zumindest einen auswechselbaren, zur Aufnahme eines Additivvorrates vorgesehenen kartuschenartigen Behälter (51) aufweist, der mit dem mindestens einen Einlass (26) des Additiv-Durchlasskanals (24) in Verbindung steht und dass der zumindest eine Einspritzkopf (22) eine Einspritzkopf-Anschlusseinrichtung (56) aufweist, über die der Einspritzkopf (22) mit dem Druckmedium-Strömungskanal (10) verbunden werden kann.

18. Verfahren zur Zerstäubung eines flüssigen Additivs, insbesondere eines Schmiermittels, in einem gasförmigen Druckmedium, insbesondere Druckluft, das einen Druckmedium-Strömungskanal (10) durchströmt, wobei das Additiv von einem Einlass (26) mindestens eines Additiv-Durchlasskanals (24) zur Einspeisung des Additivs aus einer Additiv-Versorgungseinrichtung (27, 28) zu einem in den Druckmedium-Strömungskanal (10) mündenden Auslass (25) gefördert wird, wobei eine Erfassungseinrichtung (17, 18) mindestens eine physikalische Größe in dem Druckmedium-Strömungskanal (10) ermittelt, wobei die Erfassungseinrichtung (17, 18) die mindestens eine physikalische Größe über eine Meldeeinrichtung (19, 20) an eine Steuereinrichtung (21) meldet, wobei in dem mindestens einen Additiv-Durchlasskanal (24) eine Druckerzeugungsvorrichtung (43, 47) Additiv-Tropfen am Auslass (25) ausstoßende Druckimpulse auf das Additiv ausübt, und wobei die Steuereinrichtung (21) in Abhängigkeit von der mindestens einen durch die Erfassungseinrichtung (17, 18) ermittelten physikalischen Größe die Druckerzeugungsvorrichtung (43, 47) steuert, **dadurch gekennzeichnet, dass** die Erfassungseinrichtung (17, 18) als mindestens eine physikalische Größe die Konzentration des Additivs in dem Druckmedium ermittelt.

## Claims

1. Additive atomiser for atomising a liquid additive, in particular a lubricant, in a gaseous pressure medium, in particular compressed air, with at least one additive through-passage (24), which has an inlet (26) for feeding in the additive from an additive supply unit (27, 28), and the outlet (25) of which terminates in a pressure medium flow passage (10) through which the pressure medium flows, wherein a detection device (17, 18) for the determination of at least one physical variable which the detection device (17, 18) can signal to a control unit (21) via a signalling device (19, 20) is assigned to the pressure medium flow passage (10), and wherein the at least one additive through-passage (24) incorporates a pressure generating device (43, 47), by means of which a pressure pulse can be applied to the additive to eject an additive droplet at the outlet (25), and which can be controlled by the control unit (21) in dependence on the at least one physical variable determined by the detection device (17, 18), **characterised in that** the detection device (17, 18) determines the additive concentration in the pressure medium as at least one physical variable.

2. Additive atomiser according to claim 1, **characterised in that** the pressure generating device (43, 47) comprises at least one piezoelectric and/or magnetorestrictive and/or memory-metallic element (43) and/or a heating element (47) for the evaporation of the additive or of a separate operating fluid to generate the pressure pulse.

3. Additive atomiser according to claim 1 or 2, **characterised in that** the detection device (17, 18) determines as at least one physical variable the current flow of pressure medium through the pressure medium flow passage (10).

4. Additive atomiser according to claim 1, 2 or 3, **characterised in that** a heating and/or cooling unit (36) is provided for tempering, expediently at least in a section of the additive through-passage (24), the additive to condition its viscosity.

5. Additive atomiser according to any of claims 1 to 4, **characterised in that** the additive supply unit (27, 28) is designed to form a part of the additive atomiser and incorporates at least one detachable cartridge-type container (27, 28) to accommodate an additive stock.

6. Additive atomiser according to any of claims 1 to 5, **characterised in that** the additive through-passage (24) is formed in an injection head (22) with a connecting section for at least one detachable cartridge-type container (51) provided for the accommodation of an additive stock, said connecting section being connected to the at least one inlet (26) of the additive through-passage (24).

7. Additive atomiser according to any of claims 1 to 6, **characterised in that** it incorporates a connecting line (33) to the pressure medium flow passage (10), whereby pressure medium can be admitted to the additive supply unit (27, 28), so that the additive is subjected to a pressure from the additive supply unit (27, 28) in the direction of the additive through-passage (24).

8. Additive atomiser according to any of claims 1 to 7, **characterised in that** the additive through-passage (24) is designed to be capillary at least in a section, so that additive is conveyed by capillary action from the additive supply unit (27, 28) into the additive through-passage (24) following the ejection of an additive droplet (50) from the outlet (25).

9. Additive atomiser according to any of claims 1 to 8, **characterised in that** at least one lamella (43) capable of piezoelectric and/or magnetorestrictive and/or memory-metallic actuation is provided as a pressure generating device (43, 47).

10. Additive atomiser according to claim 9, **characterised in that** the at least one lamella (43) capable of piezoelectric and/or magnetorestrictive and/or memory-metallic actuation is so arranged that the lamella (43) seals the outlet (25) if a static electric voltage and/or a static magnetic field and/or a static temperature is applied.

11. Additive atomiser according to claim 9, **characterised in that** the at least one lamella (43) is preloaded towards a position sealing the outlet (25).

12. Additive atomiser according to any of the preceding claims, **characterised in that** the pressure medium flow passage (10) houses a diverting device (32), through which the additive droplets ejected at the at least one outlet (25) are diverted from their ejection path.

13. Additive atomiser according to any of the preceding claims, **characterised in that** the additive atomiser incorporates the control unit (21).

14. Fluid power device, for example in the form of a valve or a drive, to which is assigned at least one additive atomiser according to any of claims 1 to 13, wherein the pressure medium flow passage (10) is formed directly within the fluid power device.

15. Fluid power device according to claim 14, **characterised in that** the at least one additive atomiser is designed as a part of the fluid power device.

16. Conditioning unit, for example lubricator, for a gaseous pressure medium, in particular for compressed air, **characterised in that** the conditioning unit includes at least one additive atomiser according to any of claims 1 to 13.

17. Additive supply unit (27, 28) for an additive atomiser according to any of claims 1 to 13 for a fluid power device according to claim 14 or 15 or for a conditioning unit according to claim 16, **characterised in that** the additive supply unit (27, 28) incorporates at least one injection head (22), wherein the additive through-passage (24) is formed and which incorporates a connecting section for at least one interchangeable cartridge-type container (51) provided for the accommodation of an additive stock, which is connected to the at least one inlet (26) of the additive through-passage (24), and **in that** the at least one injection head (22) features an injection head connecting device (56), by means of which the injection head (22) can be connected to the pressure medium flow passage (10).

18. Method for atomising a liquid additive, in particular a lubricant, in a gaseous pressure medium, in particular compressed air, which flows through a pressure medium flow passage (10), wherein the additive is conveyed from an inlet (26) of at least one additive through-passage (24) provided for feeding in the additive from an additive supply unit (27, 28) to an outlet (25) terminating in the pressure medium flow passage (10), wherein a detection device (17, 18) determines at least one physical variable in the pressure medium flow passage (10), wherein the detection device (17, 18) signals the at least one physical variable via a signalling device (19, 20) to a control unit (21), wherein a pressure generating device (43, 47) in the at least one additive through-passage (24) applies pressure pulses to the additive to eject additive droplets at the outlet (25), and wherein the control unit (21) controls the pressure generating device (43, 47) in dependence on the at least one physical variable determined by the detection device (17, 18), **characterised in that** the detection device (17, 18) determines the additive concentration in the pressure medium as at least one physical variable.

## Revendications

1. Dispositif de pulvérisation d'additif pour pulvériser un additif liquide, en particulier un lubrifiant, dans un fluide gazeux sous pression, en particulier de l'air comprimé, avec au moins un canal de passage d'additif (24) qui comporte une entrée (26) pour l'alimentation de l'additif depuis un dispositif d'alimentation en additif (27, 28) et dont la sortie (25) débouche dans un canal d'écoulement de fluide sous pression (10) qui est traversé par le fluide sous pression, au canal d'écoulement de fluide sous pression (10) étant associé un dispositif de détection (17; 18) pour déterminer au moins une grandeur physique que le dispositif de détection (17, 18) peut signaler par un dispositif de signalisation (19, 20) à un dispositif de commande (21), et dans lequel dans le au moins un canal de passage d'additif (24) est prévu un dispositif de production de pression (43, 47) par lequel une impulsion de pression, éjectant une goutte d'additif à la sortie (25), peut être exercée sur l'additif et qui peut être commandé par le dispositif de commande (21) en fonction de la au moins une grandeur physique déterminée par le dispositif de détection (17, 18), **caractérisé en ce que** le dispositif de détection (17, 18) détermine, comme au moins une grandeur physique, la concentration de l'additif dans le fluide sous pression.

2. Dispositif de pulvérisation d'additif selon la revendication 1, **caractérisé en ce que** le dispositif de production de pression (43, 47) contient au moins un élément (43) piézo-électrique et/ou magnétostrictif et/ou métallique à mémoire et/ou un élément chauffant (47), vaporisant l'additif ou un liquide de travail séparé, pour produire l'impulsion de pression.

3. Dispositif de pulvérisation d'additif selon la revendication 1 ou 2, **caractérisé en ce que** le dispositif de détection (17, 18) détermine, comme au moins une grandeur physique, le débit momentané du fluide sous pression à travers le canal d'écoulement de fluide sous pression (10).

4. Dispositif de pulvérisation d'additif selon la revendication 1, 2 ou 3, **caractérisé en ce qu'**il est prévu un dispositif de chauffage et/ou un dispositif de refroidissement (36) qui tempère l'additif, avantageusement au moins dans une section du canal de passage d'additif (24), pour le conditionnement de la viscosité.

5. Dispositif de pulvérisation d'additif selon l'une des revendications 1 à 4, **caractérisé en ce que** le dispositif d'alimentation en additif (27, 28) est réalisé comme partie intégrante du dispositif de pulvérisation de l'additif et comporte au moins un récipient (27, 28) séparable, de type cartouche, prévu pour recevoir une réserve d'additif.

6. Dispositif de pulvérisation d'additif selon l'une des revendications 1 à 5, **caractérisé en ce que** le canal de passage d'additif (24) est réalisé dans une tête d'injection (22) qui comporte une partie de raccordement pour au moins un récipient (51) séparable, de type cartouche, prévu pour recevoir une réserve d'additif, laquelle partie est en liaison avec la au moins une entrée (26) du canal de passage d'additif (24).

7. Dispositif de pulvérisation d'additif selon l'une des revendications 1 à 6, **caractérisé en ce qu'**il comporte une conduite de liaison (33) avec le canal d'écoulement de fluide sous pression (10), par laquelle le dispositif d'alimentation en additif (27, 28) peut être soumis à l'action du fluide sous pression de manière que l'additif subisse, depuis le dispositif d'alimentation en additif (27, 28), une pression en direction du canal de passage d'additif (24).

8. Dispositif de pulvérisation d'additif selon l'une des revendications 1 à 7, **caractérisé en ce que** le canal de passage d'additif (24) est réalisé de manière capillaire au moins dans une zone partielle, de manière qu'après éjection d'une goutte d'additif (50) à l'extérieur de la sortie (25), l'additif soit transféré, par effet de capillarité, depuis le dispositif d'alimentation en additif (27, 28) dans le canal de passage d'additif (24).

9. Dispositif de pulvérisation d'additif selon l'une des revendications 1 à 8, **caractérisé en ce que** dans le canal de passage d'additif (24) il est prévu comme dispositif de production de pression (43, 47) au moins une lamelle (43) pouvant être actionnée de façon piézo-électrique et/ou magnétostrictive et/ou par métal à mémoire.

10. Dispositif de pulvérisation d'additif selon la revendication 9, **caractérisé en ce que** la au moins une lamelle (43) à actionnement piézo-électrique et/ou magnétostrictif et/ou par métal à mémoire, est disposée de manière que la lamelle ferme la sortie (25) lorsque s'applique une tension de repos électrique et/ou un champ de repos magnétique et/ou une température de repos.

11. Dispositif de pulvérisation d'additif selon la revendication 9, **caractérisé en ce que** la au moins une lamelle (43) est précontrainte dans une position fermant la sortie (25).

12. Dispositif de pulvérisation d'additif selon l'une des revendications précédentes, **caractérisé en ce que** dans le canal d'écoulement de fluide sous pression (10) est prévu un dispositif de déviation (32) par lequel les gouttes d'additif, éjectées à la au moins une sortie (25), sont déviées de leur trajectoire d'éjection.

13. Dispositif de pulvérisation d'additif selon l'une des revendications précédentes, **caractérisé en ce que** le dispositif de pulvérisation d'additif contient le dispositif de commande (21).

14. Système fluidique, par exemple sous la forme d'une soupape ou d'un dispositif d'entraînement, auquel est associé au moins un dispositif de pulvérisation d'additif selon l'une des revendications 1 à 13, le canal d'écoulement de fluide sous pression (10) étant réalisé directement dans le système fluidique.

15. Système fluidique selon la revendication 14, **caractérisé en ce que** le au moins un dispositif de pulvérisation d'additif est réalisé comme partie intégrante du système fluidique.

16. Unité de préparation, par exemple graisseur, pour un fluide sous pression gazeux, en particulier pour de l'air comprimé, **caractérisée en ce que** l'unité de préparation comporte au moins un dispositif de pulvérisation d'additif selon l'une des revendications 1 à 13.

17. Dispositif d'alimentation en additif (27, 28) pour un dispositif de pulvérisation d'additif selon l'une des revendications 1 à 13, pour un système fluidique selon la revendication 14 ou 15 ou pour une unité de préparation selon la revendication 16, **caractérisé en ce que** le dispositif d'alimentation en additif (27, 28) comporte au moins une tête d'injection (22) dans laquelle est réalisé le canal de passage d'additif (24) et qui comporte une partie de raccordement pour au moins un récipient (51) échangeable, de type cartouche, prévu pour recevoir une réserve d'additif, lequel est en liaison avec la au moins une entrée (26) du canal de passage d'additif (24), et **en ce que** la au moins une tête d'injection (22) comporte un dispositif de raccordement de tête d'injection (56), par lequel la tête d'injection (22) peut être reliée au canal d'écoulement de fluide sous pression (10).

18. Procédé de pulvérisation d'un additif liquide, en particulier d'un lubrifiant, dans un fluide sous pression gazeux, en particulier de l'air comprimé, qui traverse un canal d'écoulement de fluide sous pression (10), l'additif étant transféré depuis une entrée (26) d'au moins un canal de passage d'additif (24) pour l'alimentation de l'additif à partir d'un dispositif d'alimentation en additif (27, 28) vers une sortie (25) débouchant dans le canal d'écoulement de fluide sous pression (10), un dispositif de détection (17, 18) déterminant au moins une grandeur physique dans le canal d'écoulement de fluide sous pression (10), le dispositif de détection (17, 18) signalant la au moins une grandeur physique, par un dispositif de signalisation (19, 20), à un dispositif de commande (21), dans le au moins un canal de passage d'additif (24), un dispositif de production de pression (43, 47) exerçant sur l'additif des impulsions de pression éjectant des gouttes d'additif à la sortie (25), et le dispositif de commande (21) commandant, en fonction de la au moins une grandeur physique déterminée par le dispositif de détection (17, 18), le dispositif de production de pression (43, 47), **caractérisé en ce que** le dispositif de détection (17, 18) détermine, comme au moins une grandeur physique, la concentration de l'additif dans le fluide sous pression.
